# EUROPEAN PATENT APPLICATION

(11) **EP 4 761 451 A1**
(43) Date of publication of application: **17.06.2026**
(21) Application number: 24854419.9
(22) Date of filing: 09.08.2024
(51) Int. Cl.: H04W 76/12, H04L 41/0894, H04W 12/06, H04W 84/04, H04W 88/14

(54) **METHOD AND APPARATUS FOR SELECTING NETWORK FOR TRANSMITTING DATA TRAFFIC OF TERMINAL IN WIRELESS COMMUNICATION SYSTEM USING FEMTO BASE STATION**

(30) Priority: 11.08.2023 KR 20230105913
(71) Applicant: Samsung Electronics Co., Ltd., Suwon-si, Gyeonggi-do 16677 (KR)
(72) Inventor: BAEK, Youngkyo, Suwon-si Gyeonggi-do 16677 (KR); PARK, Jungshin, Suwon-si Gyeonggi-do 16677 (KR)
(74) Representative: Gulde & Partner
(86) International application number: PCT/KR2024/011915
(87) International publication number: WO 2025/037868

(57) **Abstract**

The present disclosure relates to a method and an apparatus for efficiently selecting a network for transmitting data traffic of a terminal in a wireless communication system using a femto base station. A method performed by an AMF in a wireless communication system supporting a femto system, according to embodiments of the present disclosure, comprises the steps of: receiving, from the femto base station to which the terminal is connected in the femto system, first information related to the femto system and a PDU session establishment request message for the terminal; selecting, on the basis of the first information, an SMF for managing a PDU session of the terminal; and transmitting, on the basis of the first information, a PDU session generation request message to the selected SMF.

## Description

### [Technical Field]

The disclosure relates to a method and device for providing a communication service to a user equipment (UE) through a femto base station in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

In case that a service is provided by installing a femto base station in a wireless communication system, a femto system may be established including the femto base station and a local SMF or a local UPF. The femto system is intended to enable the use of 5G communication services in a narrow area such as a home or a floor of a building, and in the femto system, a communication carrier does not directly install a base station, and for example, a consumer/user may purchase and install a femto system to receive high-quality 5G communication services. In case that a communication service is provided to a UE connected to the femto system in a local data network of the femto system, there may be an advantage of offloading traffic of a macro data network to the local data network.

The disclosure intends to propose a scheme for a carrier to control data traffic for a UE connected to a wireless network through a femto base station, such as determining whether to serve/provide the data traffic in a local data network or a macro data network.

The disclosure provides a method and device for efficiently selecting a network for delivering data traffic of a UE in a wireless communication system using a femto base station.

The disclosure provides a method and device for establishing a PDU session of a UE in a wireless communication system supporting a femto system.

The disclosure provides a method and device for efficiently delivering data traffic of a UE using at least one of a local data network and a macro data network in a wireless communication system.

### [Technical Solution]

According to an embodiment of the disclosure, a method performed by an AMF in a wireless communication system supporting a femto system includes receiving, from a femto base station to which a UE is accessed in the femto system, first information related to the femto system and a PDU session establishment request message for the UE, selecting, based on the first information, an SMF managing a PDU session of the UE, and transmitting, based on the first information, a PDU session creation request message to the selected SMF.

Further, according to an embodiment of the disclosure, a method performed by an SMF in a wireless communication system supporting a femto system includes receiving, from an AMF having received a PDU session establishment request from a femto base station to which a UE is accessed in the femto system, a PDU session creation request message including information related to the femto system, performing an authentication procedure for use of the femto system through a PCF managing policy information, and selecting, based on a result of the authentication and the information related to the femto system, a UPF processing data traffic of the UE in the femto system.

Further, according to an embodiment of the disclosure, an AMF in a wireless communication system supporting a femto system includes a transceiver and a processor configured to receive, through the transceiver, from a femto base station to which a UE is accessed in the femto system, first information related to the femto system and a PDU session establishment request message for the UE, select, based on the first information, an SMF managing a PDU session of the UE, and transmit, through the transceiver, based on the first information, a PDU session creation request message to the selected SMF.

Further, according to an embodiment of the disclosure, an SMF in a wireless communication system supporting a femto system includes a transceiver and a processor configured to receive, through the transceiver, from an AMF having received a PDU session establishment request from a femto base station to which a UE is accessed in the femto system, a PDU session creation request message including information related to the femto system, perform an authentication procedure for use of the femto system through a PCF managing policy information, and select, based on a result of the authentication and the information related to the femto system, a UPF processing data traffic of the UE in the femto system.

### [Brief Description of Drawings]

FIG. 1A is a view illustrating an example of a network structure for a wireless communication system.
FIG. 1B is a view illustrating an example of a structure of a wireless communication system supporting a femto system according to an embodiment of the disclosure.
FIG. 1C is a view illustrating an example of a structure of a wireless communication system supporting a femto system according to an embodiment of the disclosure.
FIG. 2 is a view illustrating a method for providing UE policy information (UE POLICY) for femto system use to a UE in a wireless communication system supporting a femto system according to an embodiment of the disclosure.
FIGS. 3A and 3B are views illustrating a method for creating a PDU session based on UE policy information (UE POLICY) for a UE connected through a femto system in a wireless communication system supporting a femto system according to an embodiment of the disclosure.
FIGS. 4A and 4B are views illustrating a method for creating a PDU session based on subscription information of a UE connected to a network through a femto system according to an embodiment of the disclosure.
FIGS. 5A and 5B are views illustrating a method for creating a PDU session based on UE policy information (UE POLICY) of a UE connected to a network through a femto system in a wireless communication system supporting a femto system according to an embodiment of the disclosure.
FIGS. 6A and 6B are views illustrating a method for creating a PDU session based on UE policy information (UE POLICY) for a UE connected to a network through a femto system in a wireless communication system supporting a femto system according to an embodiment of the disclosure.
FIG. 7 is a view illustrating a configuration of a network entity in a wireless communication system according to an embodiment of the disclosure.

### [Mode for Carrying out the Invention]

Hereinafter, the operational principle of the disclosure is described below with reference to the accompanying drawings. When determined to make the subject matter of the present disclosure unclear, the details of the known functions or configurations may be skipped. The terms as used herein are defined considering the functions in the present disclosure and may be replaced with other terms according to the intention or practice of the user or operator. Therefore, the terms should be defined based on the overall disclosure.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the scope of the disclosure is not limited to embodiments described herein, but rather, other various changes may be made thereto. Various embodiments are provided for thorough disclosure of the present invention and making the category of the present invention known to one of ordinary skill in the art, and the present invention is defined only by the claims. The same reference numerals refer to the same components throughout the specification.

In this case, it will be understood that each block of the process flow diagrams and combinations of blocks in the flow diagrams may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "...unit" means a software element or a hardware element. The '...unit' plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. Further, in various embodiments of the disclosure, a "...unit" may include one or more processors.

As used herein, each of such phrases as "A or B", "at least one of A and B", "at least one of A or B", "A, B, or C", "at least one of A, B, and C" and "at least one of A, B, or C" may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

In various embodiments of the disclosure, user equipment may be referred to as a UE, a UE, a mobile station (MS), a cellular phone, a smartphone, a computer, or various devices capable of performing a communication function.

Various embodiments of the disclosure may also apply to other communication systems with similar technical background or channel form. Further, various embodiments of the disclosure may be modified in such a range as not to significantly depart from the scope of the disclosure under the determination by one of ordinary skill in the art and such modifications may be applicable to other communication systems.

In a detailed description of various embodiments of the disclosure, a communication system may use wireless communication systems, e.g., the new RAN (NR), which is the radio access network, and the packet core (5G system, or 5G core network, or next generation core (NG core)), which is the core network, according to the 5G communication standard of the 3GPP which is a radio communication standardization organization. Embodiments of the present invention may also be applicable to communication systems with a similar technical background with minor changes without significantly departing from the scope of the present invention, and this may be possible under the determination of those skilled in the art to which the present invention pertains.

A radio access network (RAN) as the wireless access network may be installed in a macro network and may also be installed through a femto base station of a femto system. In embodiments of the disclosure, the femto base station may be referred to by various terms such as Femto gNB (next Generation Node B) or F-gNB or Home gNB or H-gNB or Femto NG-RAN or F-NG-RAN, and at least one of the above-mentioned terms may be used interchangeably. Further, the femto system may consist only of Femto gNBs or may be constituted of a user plane function (UPF) in addition to Femto gNBs. Further, in embodiments of the disclosure, a UPF constituting the femto system may be referred to as a local UPF or L-UPF or Femto UPF or F-UPF, and at least one of the above-mentioned terms may be used interchangeably. Alternatively, the Femto system may include at least one of a session management function (SMF) and a UPF in addition to a femto gNB. In embodiments of the disclosure, an SMF constituting the femto system may be referred to as a local SMF or L-SMF or Femto SMF or F-SMF, and at least one of the above-mentioned terms may be used interchangeably.

As used herein, terms for identifying access nodes, terms denoting network entities (NEs), terms denoting messages, terms denoting interfaces between network functions (NFs), and terms denoting various pieces of identification information are provided as an example for ease of description. Thus, various embodiments of the disclosure are not limited to the terms, and the terms may be replaced with other terms denoting objects with equivalent technical meanings.

The 5G system may support the network slice, and traffic for different network slices may be processed by different protocol data unit (PDU) sessions. The PDU session may mean an association between a data network providing a PDU connection service and a UE. The network slice may be understood as technology for logically configuring a network with a set of network functions (NFs) (or network entities) to support various services with different characteristics, such as broadband communication services, massive IoT, V2X, or other mission critical services, and separating different network slices. Therefore, even when a communication failure occurs in one network slice, communication in other network slices is not affected, so that it may be possible to provide a stable communication service. In various embodiments of the disclosure, the term "slice" may be interchangeably used with "network slice". In such a network environment, the UE may access a plurality of network slices when receiving various services. Further, the network function (NF) may be a software instance running on hardware and be implemented as a virtualized function instantiated on a network element or an appropriate platform. Of course, the example is not limited thereto, and an NF may be configured as independent hardware or may be configured as a combination of software and hardware.

The mobile communication carrier may constitute the network slice and may allocate network resources suitable for a specific service for each network slice or for each set of network slices. Network resource may refer to an NF or a logical resource provided by the NF or a radio resource allocated by the base station.

For example, a mobile communication carrier may configure network slice A for providing a mobile broadband service, network slice B for providing a vehicle communication service, and network slice C for providing an extended reality (XR) service as described below. In other words, the 5G network may efficiently provide a corresponding service to a UE through a specialized network slice suited for the characteristics of each service. In the 5G system, the network slice may be represented as single-network slice selection assistance information (S-NSSAI). The S-NSSAI may include a slice/service type (SST) value and a slice differentiator (SD) value. The SST may indicate the characteristics of the service supported by the network slice (e.g., enhanced mobile broadband (eMBB), IoT, ultra reliability low latency communication (URLLC), V2X, XR service etc.). The SD may be a value used as an additional identifier for a specific service referred to as SST.

Various embodiments of the disclosure are described below with reference to the drawings.

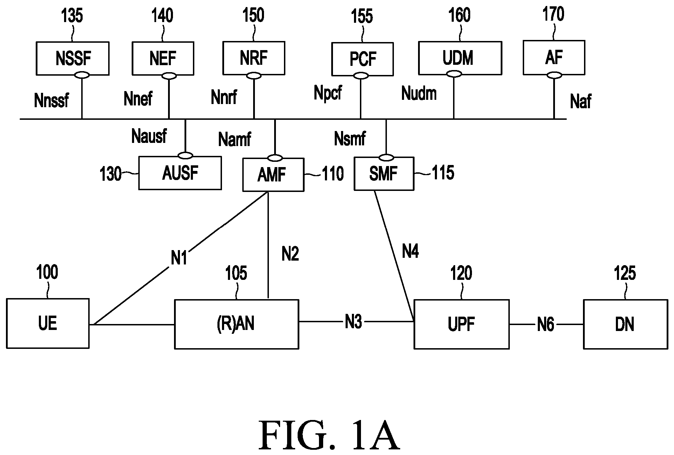

In the disclosure, the network technology may refer to the standards (e.g., TS 23.501, TS 23.502, TS 23.503, etc.) defined by the international telecommunication union (ITU) or 3GPP, and the components included in the network architecture of FIG. 1A may mean physical entities or may mean software that performs an individual function or hardware combined with software. In the drawings, reference numerals shown as N1, N2, N3,..., Nxxx indicate known interfaces between the NFs in the 5G core network (CN).

For ease of description, hereinafter, some of the terms and names defined in the 3rd generation partnership project long term evolution (3GPP LTE) standards may be used. However, the disclosure is not limited by such terms and names and may be likewise applicable to systems conforming to other standards.

FIG. 1A is a view illustrating an example of a network structure for a wireless communication system.

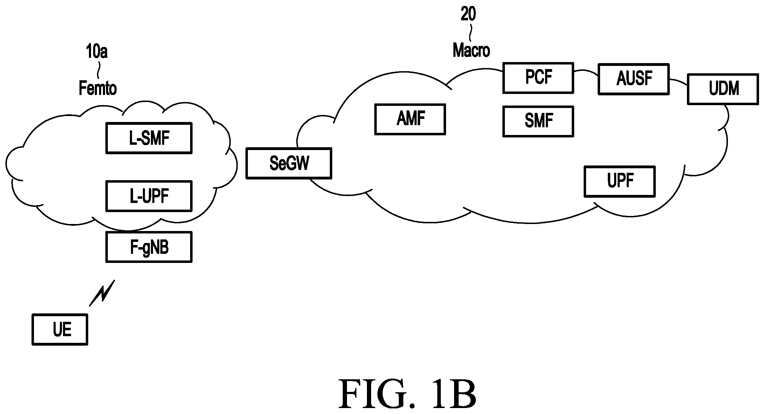

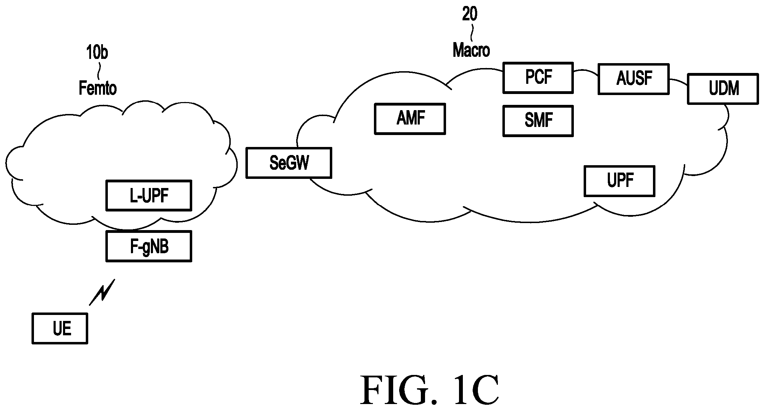

The wireless communication system of FIG. 1A illustrates a 5G system as an example, and the 5G system may include a 5G core network (5GC), a base station 105, and a UE 100. The 5GC may include an access and mobility management function (AMF) 110 managing mobility of the UE 100, a session management function (SMF) 115 managing a session, a user plane function (UPF) 120 connected to a data network (DN) 125 and performing a data delivery role, a network slice selection function (NSSF) 125 selecting a network slice serving the UE 100, an authentication server function (AUSF) 130 performing authentication of network entity(ies) in the 5G system, a network exposure function (NEF) 170 delivering or receiving events occurring in the 5G system and supported capability to/from the outside, a network repository function (NRF) 150 managing registration information of NFs, a policy control function (PCF) 155 providing a policy control function of a network carrier, and a user data management (UDM) 160 providing a data management function such as subscriber data and policy control data, and an application function (AF) 170 providing an application service may communicate with the 5GC. In the example of FIG. 1, the 5GC is not limited to the example, and the 5GC may include more or fewer network entities than the example of FIG. 1.

The AMF 110 is an entity for managing access and mobility of the UE 100. As an example, the AMF 110 may perform such functions as registration of the UE 100, connection, reachability, mobility management, access identification/authentication, and mobility event generation. Further, the AMF 110 may serve as a UE-core network endpoint connecting the UE to other network entity(ies) of the 5GC of the macro system or the femto system through an F-gNB.

The SMF 115 may perform a management function for a protocol data unit (PDU) session of the UE 101. For example, the SMF 115 may perform network functions such as a session management function through session establishment, modification, release, and tunnel maintenance between the UPF 120 and the base station 105, an Internet Protocol (IP) address allocation and management function of the UE 100, user plane selection and control, traffic processing control in the UPF 120, and charging data collection control.

The UPF 120 may perform a data processing function of transferring data transmitted by the UE 100 to the DN 125, which is an external network, or transferring data received from the DN 125 to the UE 100. Further, the UPF 120 may perform network functions, such as acting as an anchor between radio access technologies (RATs), providing connection with PDU sessions and the AF 170, packet routing and forwarding, packet inspection, application of user plane policy, creating a traffic usage report, or buffering.

The PCF 155 may manage operator policy information for providing the service in the 5G system, and the UDM 160 may perform functions such as generating authentication information for 3GPP security, managing the list of network functions NF supporting the UE 100, and managing subscription information. A unified data repository (UDR) (not illustrated) may perform a function of storing and providing subscription information managed by the UDM 160, structured data for exposure, and application data associated with the network exposure function (NEF) 140 or a service. Further, the UDR may store subscription information of a UE and provide the stored subscription information to the UDM 160. Further, the UDR may store operator policy information and may provide stored operator policy information to the PCF 155.

Further, the NEF 140 may perform a function of delivering or receiving events occurring in the 5G system and supported capability to/from the outside. For example, the NEF 140 may perform functions, such as safe supply of information about of the AF/AS 170 to the 5GC, conversion of internal/external information, and storing in the UDR and then redistributing the information received from other NFs.

The UE 100 may access the NG-RAN 105 and register in the 5G system. For example, the UE may access the NG-RAN and perform a registration procedure with the AMF 110. During the registration procedure, the AMF 110 may determine a network slice available to the UE 100 accessing the NG-RAN 105 and allocate it to the UE 100. The UE 100 may select a network slice and establish a PDU session for communication with the AF/AS 170. One PDU session may include one or more quality-of-service (QoS) flows, and each QoS flow may set different parameters to provide a different transmission performance required for each application service.

Further, in embodiments described below, the basic functions of network entities may refer to the description of FIG. 1A.

According to the disclosure, when a communication service is provided by installing a femto base station in a wireless communication system, a femto system including a femto base station, a local SMF, and/or a local UPF may be configured. The femto system is a system for using 5G communication services in a narrow area such as a home or a floor of a building, and a communication carrier may not directly install a base station. For example, a consumer (user) may purchase and install a femto system to receive high-quality 5G communication services through the femto system. When a communication service is provided to a UE connected to a local data network of the femto system, traffic of a macro data network may be offloaded to the local data network, which may have the effects of traffic distribution and radio resource savings.

The disclosure intends to propose a scheme for a UE connected to a wireless network through a femto base station to receive 5G communication services through a local data network.

According to various embodiments of the disclosure, when a UE receives a communication service through a femto system including a femto base station in a wireless communication system, the local data network may be used, and traffic of the macro data network may be offloaded to the local data network, thereby saving radio resources of a macro base station.

In the disclosure, the macro system or the femto system may include an NG-RAN and a 5GC. The NG-RAN may be a base station (e.g., gNB, integrated access and backhaul (IAB), etc.) supporting a radio access technology in the 5G system.

FIG. 1B is a view illustrating an example of a structure of a wireless communication system supporting a femto system according to an embodiment of the disclosure.

Referring to FIG. 1B, a femto system 10a includes an L-SMF and an L-UPF in addition to an F-gNB, and a macro system 20 may include an AMF, an SMF, a PCF, a UPF, an AUSF, a UDM, etc. described in the example of FIG. 1A. In FIG. 1B, the macro system 20 is an example, and may have the same configuration as the example of FIG. 1A.

Further, referring to FIG. 1B, a security Gateway (SeGW) is connected between the Femto system 10a and the macro system 20 so that communication between the femto system 10a and the macro system 20 may be securely performed. In this case, for a PDU Session of a UE connecting to a local data network through the femto system 10a, an L-SMF may be selected as a serving SMF and an L-UPF may be selected as a PDU Session Anchor (PSA) UPF to create a PDU Session.

In the example of FIG. 1B, downlink data delivered from the macro system 20 to a UE may be delivered to the UE through a femto base station or F-gNB or Femto NG-RAN via the L-UPF of the femto system 10a. Further, uplink data delivered from a UE to the macro system 20 may be delivered from the UE to the macro system 20 via the L-UPF through the femto base station or F-gNB or Femto NG-RAN of the femto system 10a.

FIG. 1C is a view illustrating an example of a structure of a wireless communication system supporting a femto system according to an embodiment of the disclosure.

Referring to FIG. 1C, a femto system 10c includes an L-UPF in addition to an F-gNB, and a macro system 20 may include an AMF, an SMF, a PCF, a UPF, an AUSF, a UDM, etc. described in the example of FIG. 1A. In FIG. 1B, the macro system 20 is an example, and may have the same configuration as the example of FIG. 1A.

Further, referring to FIG. 1C, a security Gateway (SeGW) is connected between the Femto system 10b and the macro system 20 so that communication between the femto system 10b and the macro system 20 may be securely performed. In this case, for a PDU Session of a UE connecting to a local data network through the femto system 10b, an SMF in the macro system 20 may be selected as a serving SMF, and an L-UPF of the femto system 10b may be selected as a PSA UPF to create a PDU Session.

In the example of FIG. 1C, downlink data delivered from the macro system 20 to a UE may be delivered to the UE through a femto base station or F-gNB or Femto NG-RAN via the L-UPF of the femto system 10b. Further, uplink data delivered from a UE to the macro system 20 may be delivered from the UE to the macro system 20 via the L-UPF through the femto base station or F-gNB or Femto NG-RAN of the femto system 10b. Compared to the example of FIG. 1B, the example of FIG. 1C differs in that the femto system 10a of FIG. 1B further includes an L-SMF, and in the examples of FIGS. 1B and 1C, the data delivery path for a UE is the same when using the femto system.

Although embodiments of the disclosure described below are described from the perspective of using the femto system for convenience of description, embodiments of the disclosure propose a scheme for efficiently delivering data traffic of a UE using at least one of a local data network (femto system) and a macro data network (macro system) in a wireless communication system.

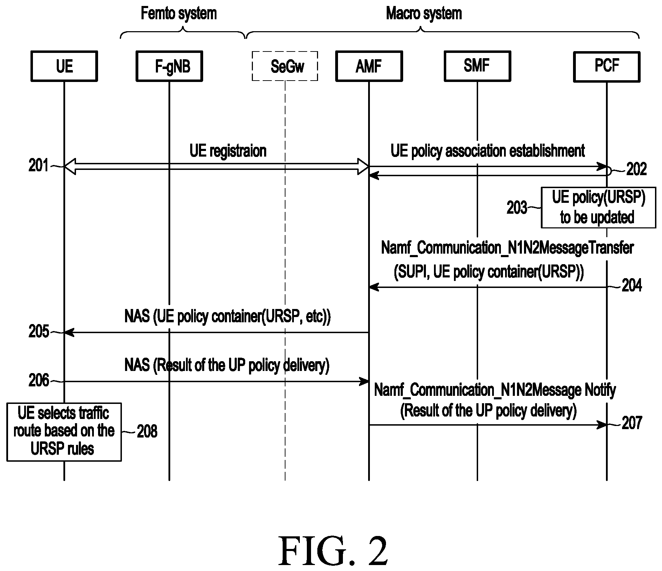

FIG. 2 is a view illustrating a method for providing UE policy information (UE POLICY) for femto system use to a UE in a wireless communication system supporting a femto system according to an embodiment of the disclosure.

Referring to FIG. 2, in step 201, a UE performs a UE registration procedure with an AMF, and in step 202, the AMF may perform a UE policy association establishment procedure with a PCF. In this case, when the PCF recognizes that the UE has UE capability to update UE policy, if the UE policy is updated such as a UE Route Selection Policy (URSP) being updated in step 203, in steps 204 to 207, the PCF delivers the updated URSP information to the UE through the AMF and performs a procedure of receiving a response from the UE. In step 204, the PCF delivers updated URSP information to the AMF through a UE policy container, and in step 205, the AMF delivers a NAS (Non-Access-Stratum) message including the UE policy container to the UE, and the UE delivers a delivery result of the updated URSP information to the PCF as a response through steps 206 and 207. Thereafter, the UE may select a traffic route such as by establishing a PDU Session using the updated URSP information as in step 208.

According to an embodiment of the disclosure, the URSP information may include the UE policy information (UE POLICY) for determining whether the UE receives a communication service through a femto base station or a macro base station, or may include information indicating whether to receive a communication service through a local data network of the femto system or a macro data network. The UE policy information (UE POLICY) may be included in a UE policy container delivered from the PCF to the UE through the AMF, and the UE policy container may be transmitted to the UE using a NAS message.

**[Table 1]**

| | |
|---|---|
| Traffic Descriptor: | Route Selection Descriptor: |
| Application descriptor=App3 | Precedence =1 |
| Connection capability = pfemto' | Network Slice Selection: S-NSSAI-c |
| | DNN Selection: DNN_1 |
| | Access Type preference: 3gpp with femto |
| | Or preferred cell type: femto |
| | Or preferred data network type: femto |
| Traffic Descriptor: | Route Selection Descriptor: |
| Applicationdescriptor=App2 | Precedence =1 |
| | Network Slice Selection: S-NSSAI-c |
| | DNN Selection: DNN_1 |
| | Access Type preference: 3gpp with femto |
| | Or preferred cell type: femto |
| | Or preferred data network type: femto |
| | ------------------ |
| | Route Selection Descriptor: |
| | Precedence =2 |
| | Network Slice Selection: S-NSSAI-a |
| | DNN Selection: DNN_3 |
| | Access Type preference: 3gpp (with macro) |
| Traffic Descriptor: | Route Selection Descriptor: |
| Applicationdescriptor=Appl | Precedence =1 |
| | Network Slice Selection: S-NSSAI-a |
| | DNN Selection: DNN_2 |
| | Access Type preference: 3gpp (with macro) |

The above [Table 1] illustrates an example of the URSP information including a policy (i.e., UE policy information) on whether the UE uses the femto system.

Referring to the [Table 1], e.g., when a connection capability or preferred connection as a Traffic Descriptor is set to 'femto' or 'local data network', that is, when a UE receives a connection capability or preferred connection as 'femto' or 'local data network' from an application and wants to receive a communication service in a local data network through a femto base station or a femto system for the corresponding traffic, it may be set to be configured as a Route Selection Descriptor that allows the communication service to be received in a local data network through the femto base station or the femto system. For example, an S-NSSAI designated for the femto system may be allocated to allow the UE to select the femto system, or a DNN designated for the femto system may be allocated to allow the UE to select the femto system, or 3gpp with femto may be allocated as an Access Type preference to allow the UE to select 3GPP access through the femto system, or femto may be allocated as a preferred cell type to allow the UE to select the femto system, or femto or local data network may be allocated as a preferred data network type to allow the UE to select the femto system. As a Route Selection Descriptor, some or all of those illustrated in the [Table 1] may be included to allow the UE to select a femto base station of the femto system or to select a local data network of the femto system.

Meanwhile, when 3gpp access or 3gpp with macro is allocated as the Access Type preference as a Route Selection Descriptor, or when macro is allocated as a preferred cell type, or when macro is allocated as a preferred data network type, the UE may be allowed to select a macro data network.

Alternatively, when a given Traffic as a Traffic descriptor of the [Table 1] corresponds to a predetermined operating system identifier (OSId) and operating system application identifier (OSApppId) as an Application descriptor and, when the UE wants to receive a communication service in a local data network through a femto base station or a femto system for the corresponding traffic, it may be set to be configured as a Route Selection Descriptor that allows the communication service to be received in a local data network through the femto base station or the femto system. For example, an S-NSSAI designated for the femto system may be allocated to allow the UE to select the femto system, or a DNN designated for the femto system may be allocated to allow the UE to select the femto system, or 3gpp with femto may be allocated as an Access Type preference to allow the UE to select 3GPP access through the femto system, or femto may be allocated as a preferred cell type to allow the UE to select the femto system, or femto or local data network may be allocated as a preferred data network type to allow the UE to select the femto system. As a Route Selection Descriptor, some or all of those illustrated in the [Table 1] may be included to allow the UE to select a femto base station of the femto system or to select a local data network of the femto system.

Meanwhile, when 3gpp access or 3gpp with macro is allocated as the Access Type preference as a Route Selection Descriptor, or when macro is allocated as a preferred cell type, or when macro is allocated as a preferred data network type, the macro data network may be selected.

Meanwhile, in the [Table 1], precedence may be allocated to the Route Selection Descriptor so that a Route Selection Descriptor mapped from a higher precedence may be used. For example, when a UE receives a request for the need for a PDU Session from an application, the UE selects a Route Selection Descriptor with the highest precedence mapped among Route Selection Descriptors corresponding to the Traffic Descriptor. In other words, when a UE is not connected to a femto base station, even when the precedence is high, a Route Selection Descriptor configured to allow the UE to select a femto base station of the femto system or to select a local data network of the femto system is not mapped, so the UE selects a route according to a Route Selection Descriptor with a lower precedence.

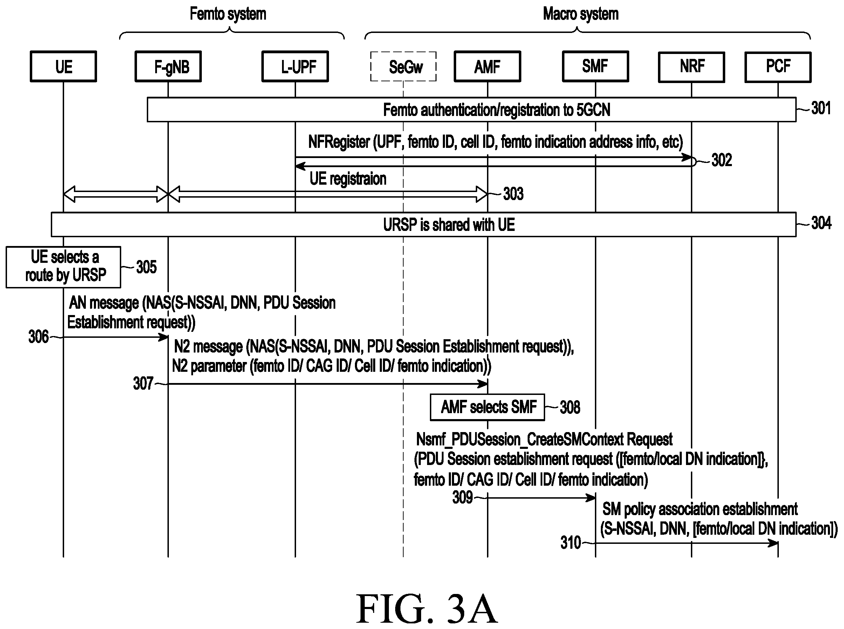

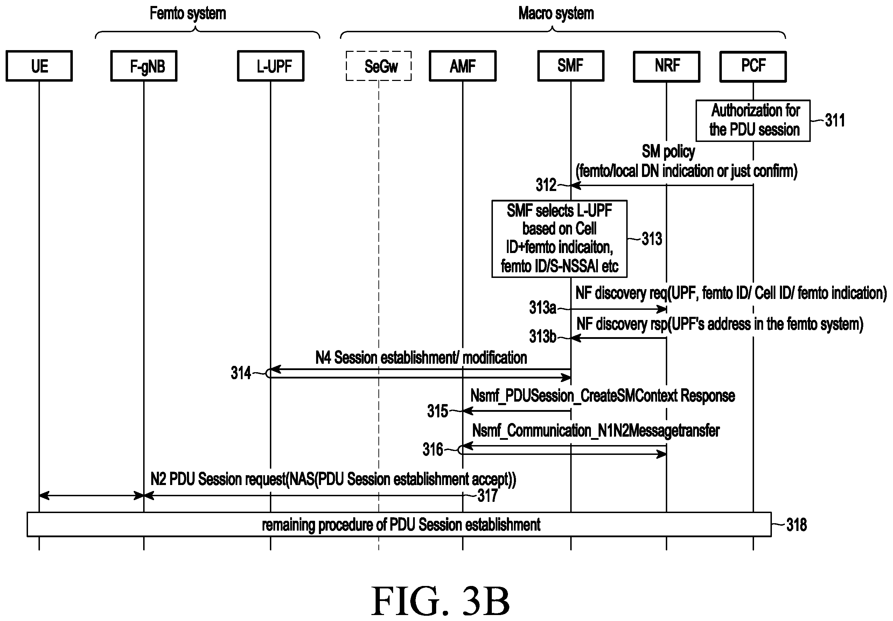

FIGS. 3A and 3B are views illustrating a method for creating a PDU session based on UE policy information (UE POLICY) for a UE connected through a femto system in a wireless communication system supporting a femto system according to an embodiment of the disclosure.

Referring to FIGS. 3A and 3B, an embodiment is illustrated in which a UE receives a communication service from a local data network using a PDU session established through a femto system including an F-gNB and an L-UPF.

Referring to FIG. 3A, first, when the femto system is installed, in step 301, the femto system connects to the macro system to authenticate the femto system, and in step 302, the network entity(ies) of the femto system may be registered with the macro system so that network entities of the femto system and network entities of the macro network may interwork to perform operations for service provision. For authentication and security between the femto system and the macro system, a transaction between the femto system and the macro system may be performed through a security GW (SeGW) of the macro network. For example, an F-gNB may register so that it may be identified in the AMF of the macro system. Through the registration, the AMF may also obtain information such as address information of the F-gNB or a cell ID of the F-gNB or a Femto ID or a femto indication indicating that the base station is a femto base station.

Further, the L-UPF of the femto system may register with the NRF of the macro system, and a network entity of the macro system may discover the L-UPF of the femto system as needed. For example, in step 302, the L-UPF may transmit an NFRegister message to the NRF of the macro system. Accordingly, the L-UPF may register information of the femto system together while informing that it is a UPF.

Further, according to an embodiment, the NFRegistser message may include at least one of an ID of a femto system to which the L-UPF belongs, or a cell ID of an F-gNB, or a femto indication as an indicator indicating that it is a femto system, or a dedicated S-NSSAI used for the femto system, or address information of the L-UPF. The NRF may store the above-mentioned information (e.g., information about the femto system, etc.) in an NF profile and respond when another network entity such as an SMF wants to discover the L-UPF of the femto system later.

After the femto system is registered with the macro network, in step 303, the UE performs registration with a communication network through the F-gNB.

After completing network registration, in a circumstance in which URSP information is shared between the UE and the macro system as in step 304, in step 305, in a circumstance in which the UE establishes a PDU Session through an application or the like, the UE determines/selects a route according to an appropriate route selection description such as S-NSSAI, DNN, access type preference, preferred cell type, or preferred data network type based on the URSP information, and accordingly may start a PDU session establishment request procedure.

In presenting the embodiment of the disclosure, a circumstance in which a matching Route is selected to connect to a local data network through a femto system is described as an example.

In step 306, the UE may transmit a PDU Session establishment request message including an indication indicating that local data network access is desired, such as a local DN indication. Alternatively, when the UE transmits an MM-NAS message including the PDU Session establishment request message to the AMF, it may include an S-NSSAI or DNN created/configured/allocated for local data network access, or transmit an MM-NAS message including an indication indicating that local data network access is desired, such as a local DN indication, to the AMF, so that the AMF may identify the intent of the UE (e.g., whether to use a local data network or a macro data network, etc.) in step 307. Alternatively, the UE may perform step 306 without including the local DN indication in any message.

The F-gNB having received the AN message from the UE may transmit an N2 message including the received MM-NAS message and an N2 parameter to the AMF in step 307. The N2 parameter may include information of the F-gNB to which the UE is connected. For example, the N2 parameter may include all or some of information such as an ID of a femto system to which the F-gNB belongs, or a Cell ID of the F-gNB, or a CAG (Closed Access Group) ID allowed by the F-gNB, or a Femto indication indicating that it is a Femto base station.

Meanwhile, the AMF having received the N2 message selects an SMF in the macro system in step 308, and in step 309, may transmit an Nsmf_PDUSession_CreateSMContext Request message including the PDU Session establishment request message included and delivered in the MM-NAS message to the selected SMF. Further, when the AMF recognizes from the S-NSSAI or DNN or local DN indication received in step 307 that the corresponding MM-NAS message is for establishing a PDU Session to be serviced through a local data network in the femto system, the AMF may include a local DN indication in the Nsmf_PDUSession_CreateSMContext Request message. Further, when the N2 parameter includes information of the F-gNB to which the UE is connected, the Nsmf_PDUSession_CreateSMContext Request message may also include information of the F-gNB. The information of the F-gNB may include all or some of information such as an ID of a femto system to which the F-gNB belongs, or a Cell ID of the F-gNB, or a CAG ID allowed by the F-gNB, or a Femto indication indicating that it is a Femto base station.

The SMF having received the Nsmf_PDUSession_CreateSMContext Request message in step 309 may identify that the UE will use a local data network through the femto system based on the local DN indication included in the message or the local DN indication included in the PDU Session establishment request message. Further, in steps 310 to 312, the SMF may receive authentication for use of the local data network (i.e., the femto system) for the requested S-NSSAI and DNN using SM policy information received from the PCF. In this case, when the SMF requests SM policy association establishment in step 310, the request message may include some or all of an S-NSSAI, a DNN, a local DN indication, or information of the F-gNB to which the UE is connected. The information of the F-gNB may include all or some of information such as an ID of a femto system to which the F-gNB belongs, or a Cell ID of the F-gNB, or a CAG ID allowed by the F-gNB, or a Femto indication indicating that it is a Femto base station.

Referring to FIG. 3B, according to the request in step 310, the PCF performs authentication for the PDU Session in step 311, and according to the authentication result, when the PCF delivers the SM policy to the SMF in step 312, an authentication result for use of the local data network for the requested S-NSSAI and DNN may be included. For example, the PCF may deliver an authentication identify for an authentication request from the SMF, or may directly include a local DN indication to inform that the local data network may be used. Accordingly, the SMF having received the authentication identify may discover/select an L-UPF in the femto system to which the UE is connected as in step 313. Steps 313a and 313b to be described below may be understood as detailed operations of step 313 when the L-UPF is selected through the NRF. It should be noted that the embodiment of the disclosure is not limited to selecting the L-UPF through the NRF. In other words, the operation of step 313 may include various operations of selecting the L-UPF without using the NRF, and in this case, steps 313a and 313b may be omitted.

In this case, the SMF may transmit an Nnrf_NFDiscovery request message to the NRF in step 313a to obtain information of a UPF in the femto system. In this case, the Nnrf_NFDiscovery request message may include information about a UPF as a network entity that the SMF wants to discover, and the Nnrf_NFDiscovery request message may include some or all of a Femto ID or a cell ID of the F-gNB or a Femto indication obtained through step 309 to indicate the femto system or the F-gNB to which the UE is connected, in addition to the S-NSSAI and DNN. The NRF having received the request of step 313a may provide address information of the L-UPF in the femto system to which the UE is connected to the SMF in step 313b. The address information of the L-UPF may include at least one of a fully qualified domain name (FQDN) of the L-UPF or IP address and port information of the L-UPF. Of course, it is not limited to the example.

In step 314, the SMF sets up a User plane through an N4 message together with the L-UPF selected in step 313, and in steps 315 to 318, remaining PDU Session establishment processes such as delivery of a PDU Session establishment accept message are performed to create a PDU Session through which the UE may receive a communication service through the local DN.

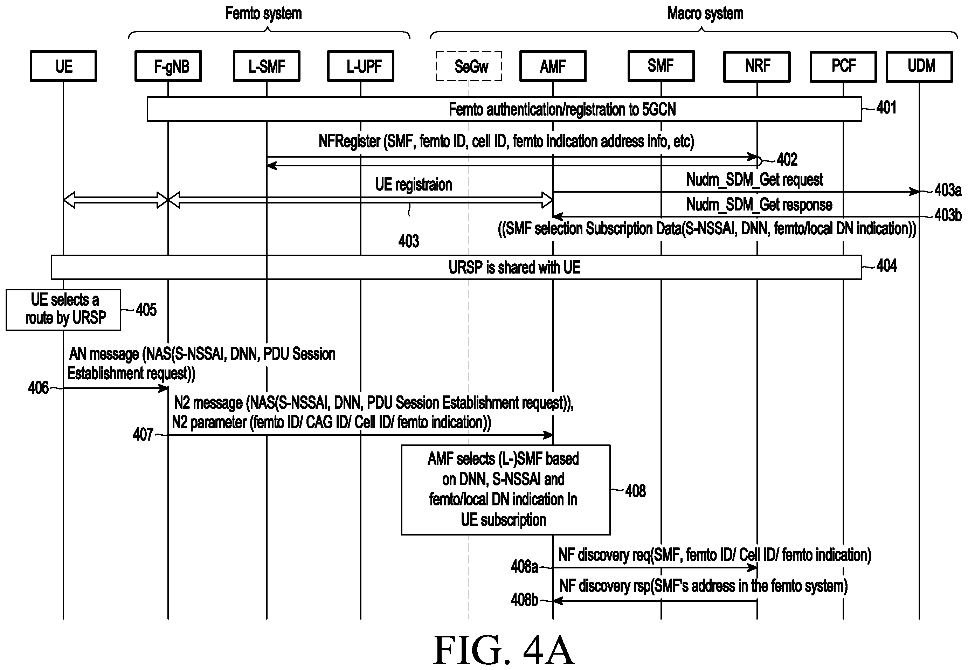

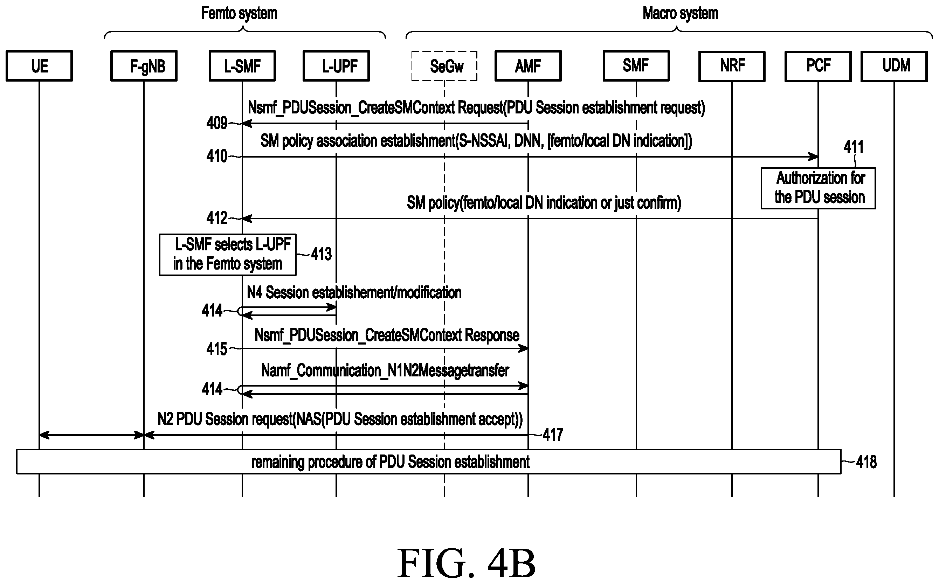

FIGS. 4A and 4B are views illustrating a method for creating a PDU session based on subscription information of a UE connected to a network through a femto system according to an embodiment of the disclosure.

Referring to FIGS. 4A and 4B, an embodiment is illustrated in which a UE receives a communication service from a local data network using a PDU session established through a femto system including an F-gNB, an L-SMF, and an L-UPF.

Referring to FIG. 4A, when the femto system is installed, in step 401, the femto system connects to the macro system to authenticate the femto system, and in step 402, the network entities of the femto system may be registered with the macro system so that network entities of the femto system and network entities of the macro system may interwork to perform operations for service provision. For authentication and security between the femto system and the macro system, a transaction between the femto system and the macro system may be performed through a security GW (SeGW) of the macro network. For example, the F-gNBF may register so that it may be identified in the AMF of the macro system. Through the registration, the AMF may also obtain information such as address information of the F-gNB or a cell ID of the F-gNB or a Femto ID or a femto indication indicating that the base station is a femto base station. Further, during the registration process, an ID and address information of the L-SMF may be included and registered with the AMF.

Further, the L-SMF of the femto system may register with the NRF of the macro system, and a network entity of the macro system may discover the L-SMF of the femto system as needed. For example, in step 402, the L-SMF may transmit an NFRegister message to the NRF of the macro system. Accordingly, the L-SMF may register information of the femto system together while informing that it is an SMF of the femto system.

Further, according to an embodiment, the NFRegister message may include at least one of an ID of a femto system to which the L-SMF belongs, or a cell ID of an F-gNB, or a femto indication as an indicator indicating that it is a femto system, or a dedicated S-NSSAI used for the femto system, or address information of the L-SMF. The NRF may store the above-mentioned information (e.g., information about the femto system, etc.) in an NF profile and respond when another network entity such as an AMF wants to discover the L-SMF of the femto system later.

After the femto system is registered with the macro network, in step 403, the UE may perform registration with a communication network through the F-gNB. In this case, the AMF may retrieve subscription information from the UDM through the processes of steps 403a and 403b. For example, the subscription information may include a local DN indication indicating local data network access through the femto system for the corresponding S-NSSAI or DNN as SMF selection subscription information or SM subscription information.

After completing network registration, in a circumstance in which URSP information is shared between the UE and the macro system as in step 404, in step 405, in a circumstance in which the UE establishes a PDU Session through an application or the like, the UE determines/selects a route according to an appropriate route selection description such as S-NSSAI, DNN, access type preference, preferred cell type, or preferred data network type according to URSP, and accordingly may start a PDU session establishment request procedure.

In presenting the embodiment of the disclosure, a circumstance in which a matching Route is selected to connect to a local data network through a femto system is described as an example.

In step 406, when the UE transmits an MM-NAS message including a PDU Session establishment request message to the AMF, it may include an S-NSSAI or DNN created/configured/allocated for local data network access, or transmit an MM-NAS message including an indication indicating that local data network access is desired, such as a local DN indication, to the AMF, so that the AMF may identify the intent of the UE (e.g., whether to use a local data network or a macro data network, etc.). Alternatively, the UE may perform step 406 without including the local DN indication in any message.

The F-gNB having received the AN message from the UE may transmit an N2 message including the received MM-NAS message and an N2 parameter to the AMF in step 407. The N2 parameter may include information of the F-gNB to which the UE is connected. For example, the N2 parameter may include all or some of information such as an ID of a femto system to which the F-gNB belongs, or a Cell ID of the F-gNB, or a CAG ID allowed by the F-gNB, or a Femto indication indicating that it is a Femto base station.

Meanwhile, the AMF having received the N2 message selects an SMF in step 408. Steps 408a and 408b to be described below may be understood as detailed operations of step 408 when the (L-)SMF is selected through the NRF. It should be noted that the embodiment of the disclosure is not limited to selecting the (L-)SMF through the NRF. In other words, the operation of step 408 may include various operations of selecting the (L-)SMF without using the NRF, and in this case, steps 408a and 408b may be omitted.

In this case, when the AMF recognizes from the S-NSSAI or DNN or local DN indication received in step 407 that the corresponding MM-NAS message is for establishing a PDU Session to be serviced through a local data network in the femto system, the AMF may select an SMF in the femto system to which the UE is connected. Alternatively, when the subscription information received from the UDM in step 403b includes a local DN indication to service the S-NSSAI or DNN requested by the UE through a local data network in the femto system, the AMF may select an SMF in the femto system to which the UE is connected.

In this case, the AMF may use information registered by the L-SMF in step 401 or discover and select an L-SMF in the same femto system as the F-gNB to which the UE is connected through the NRF.

When using the NRF, the AMF may transmit an Nnrf_NFDiscovery request message to the NRF in step 408a to obtain information of an SMF in the femto system. In this case, the Nnrf_NFDiscovery request message may include information about an SMF as a network entity that the AMF wants to discover, and the Nnrf_NFDiscovery request message may include some or all of a Femto ID or a cell ID of the F-gNB or a Femto indication obtained through step 407 to indicate the femto system or the F-gNB to which the UE is connected, in addition to the S-NSSAI and DNN. The NRF having received the request of step 408a may provide address information of the L-SMF in the femto system to which the UE is connected to the AMF in step 408b. The address information of the L-SMF may include at least one of an FQDN of the L-SMF or IP address and port information of the L-SMF. Of course, it is not limited to the example.

Referring to FIG. 4B, in step 409, the AMF may transmit an Nsmf_PDUSession_CreateSMContext Request message including the PDU Session establishment request message included and delivered in the MM-NAS message of step 407 to the selected SMF. Further, when the N2 parameter of step 407 includes information of the F-gNB to which the UE is connected, the Nsmf_PDUSession_CreateSMContext Request message may also include information of the F-gNB. The information of the F-gNB may include all or some of information such as an ID of a femto system to which the F-gNB belongs, or a Cell ID of the F-gNB, or a CAG ID allowed by the F-gNB, or a Femto indication indicating that it is a Femto base station.

The L-SMF having received the Nsmf_PDUSession_CreateSMContext Request message in step 409 may receive authentication for use of the local data network for the requested S-NSSAI and DNN through steps 410 to 412 using SM policy information received from the PCF. In this case, when the L-SMF requests SM policy association establishment in step 410, the request message may include some or all of an S-NSSAI, a DNN, a local DN indication, or information of the F-gNB to which the UE is connected. The information of the F-gNB may include all or some of information such as an ID of a femto system to which the F-gNB belongs, or a Cell ID of the F-gNB, or a CAG ID allowed by the F-gNB, or a Femto indication indicating that it is a Femto base station.

According to the request in step 410, the PCF performs authentication for the PDU Session in step 411, and according to the authentication result, when the PCF delivers the SM policy to the SMF in step 412, an authentication result for use of the local data network for the requested S-NSSAI and DNN may be included. For example, the PCF may deliver an authentication identify for an authentication request from the L-SMF, or may directly include a local DN indication to inform that the local data network may be used. Accordingly, the L-SMF having received the authentication identify may discover/select an L-UPF in the femto system to which the UE is connected as in step 413.

In step 414, the SMF sets up a User plane through an N4 message together with the L-UPF selected in step 413, and in steps 415 to 418, remaining PDU Session establishment processes such as delivery of a PDU Session establishment accept message are performed to create a PDU Session through which the UE may receive a communication service through the local DN.

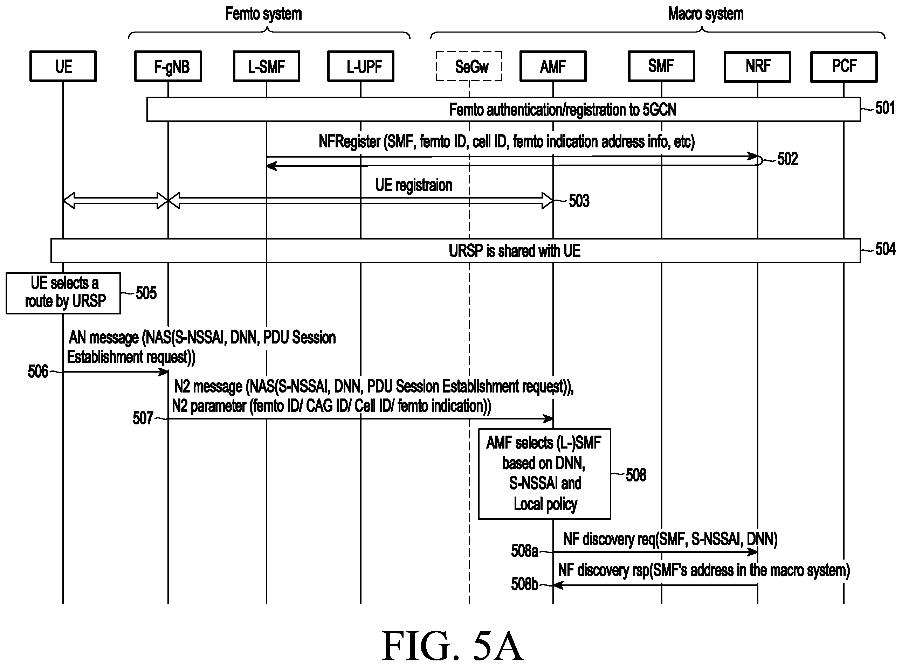

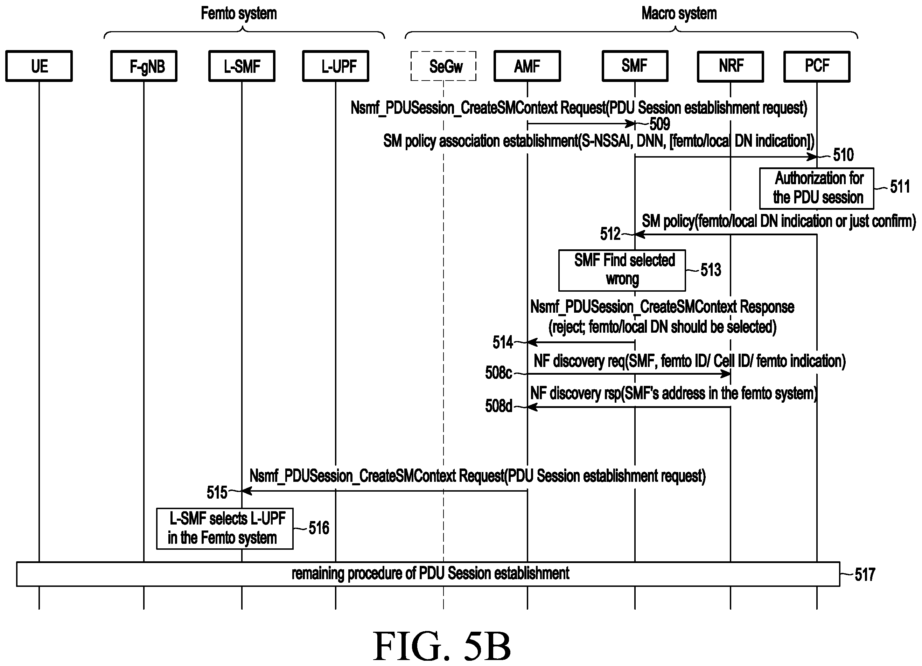

FIGS. 5A and 5B are views illustrating a method for creating a PDU session based on UE policy information (UE POLICY) of a UE connected to a network through a femto system in a wireless communication system supporting a femto system according to an embodiment of the disclosure. This embodiment relates to a method for creating a PDU session by replacing an SMF when the AMF is configured to select an SMF in the macro system or an L-SMF in the femto system according to a carrier's policy or the AMF's own policy, but the local Data network or macro data network selected according to UE policy does not match the network of the selected SMF.

Referring to FIGS. 5A and 5B, an embodiment is illustrated in which a UE receives a communication service from a local data network using a PDU session established through a femto system including an F-gNB, an L-SMF, and an L-UPF.

Referring to FIG. 5A, when the femto system is installed, in step 501, the femto system connects to the macro system to authenticate the femto system, and network entities of the femto system may be registered with the macro system so that network entities of the femto system and network entities of the macro system may interwork to perform operations for service provision. For authentication and security between the femto system and the macro system, a transaction between the femto system and the macro system may be performed through a security GW (SeGW) of the macro network. For example, the F-gNBF may register so that it may be identified in the AMF of the macro system. Through the registration, the AMF may also obtain information such as address information of the F-gNB or a cell ID of the F-gNB or a Femto ID or a femto indication indicating that the base station is a femto base station. Further, during the registration process, an ID and address information of the L-SMF may be included and registered with the AMF.

Further, the L-SMF of the femto system may register with the NRF of the macro system, and a network entity of the macro system may discover the L-SMF of the femto system as needed. For example, in step 502, the L-SMF may transmit an NFRegister message to the NRF of the macro system. Accordingly, the L-SMF may register information of the femto system together while informing that it is an SMF of the femto system.

Further, according to an embodiment, the NFRegister message may include at least one of an ID of a femto system to which the L-SMF belongs, or a cell ID of an F-gNB, or a femto indication as an indicator indicating that it is a femto system, or a dedicated S-NSSAI used for the femto system, or address information of the L-SMF. The NRF may store the above-mentioned information (e.g., information about the femto system, etc.) in an NF profile and respond when another network entity such as an AMF wants to discover the L-SMF of the femto system later.

After the femto system is registered with the macro network, in step 503, the UE may perform registration with a communication network through the F-gNB. Then, in a circumstance in which URSP information is shared between the UE and the macro system as in step 504, in a circumstance in which the UE establishes a PDU Session through an application or the like, the UE determines/selects a route according to an appropriate route selection description such as S-NSSAI, DNN, access type preference, preferred cell type, or preferred data network type according to URSP, and accordingly may start a PDU session establishment request procedure.

In presenting the embodiment of the disclosure, a circumstance in which a matching Route is selected to connect to a local data network through a femto system is described as an example.

In step 506, when the UE transmits an MM-NAS message including a PDU Session establishment request message to the AMF, it may include an S-NSSAI or DNN created/configured/allocated for local data network access, or transmit an MM-NAS message including an indication indicating that local data network access is desired, such as a local DN indication, to the AMF, so that the AMF may identify the intent of the UE (e.g., whether to use a local data network or a macro data network, etc.). Alternatively, the UE may perform step 506 without including the local DN indication in any message.

The F-gNB having received the AN message from the UE may transmit an N2 message including the received MM-NAS message and an N2 parameter to the AMF in step 507. The N2 parameter may include information of the F-gNB to which the UE is connected. For example, the N2 parameter may include all or some of information such as an ID of a femto system to which the F-gNB belongs, or a Cell ID of the F-gNB, or a CAG ID allowed by the F-gNB, or a Femto indication indicating that it is a Femto base station.

Meanwhile, the AMF having received the N2 message selects an SMF in step 508. Steps 508a and 508b to be described below may be understood as detailed operations of step 508 when the (L-)SMF is selected through the NRF. It should be noted that the embodiment of the disclosure is not limited to selecting the (L-)SMF through the NRF. In other words, the operation of step 508 may include various operations of selecting the (L-)SMF without using the NRF, and in this case, steps 508a and 508b may be omitted.

In this case, according to the S-NSSAI or DNN received in step 507 or a carrier's policy or the AMF's own policy, the AMF selects an SMF in the macro system or an SMF in the femto system to which the UE is connected. Here, although the case where it is configured to select an SMF in the macro system is described as an example, the disclosure may also be applied when it is configured to select an SMF in the femto system.

In this case, the AMF may use the NRF as in steps 508a and 508b to discover an appropriate SMF in the macro system.

Referring to FIG. 5B, in step 509, the AMF may transmit an Nsmf_PDUSession_CreateSMContext Request message including the PDU Session establishment request message included and delivered in the MM-NAS message to the selected SMF, and the SMF having received this may receive authentication for use of the local data network for the requested S-NSSAI and DNN in steps 510 to 512 using SM policy information received from the PCF. In this case, when the SMF of the macro system requests SM policy association establishment in step 510, the request message may include some or all of an S-NSSAI, a DNN, a local DN indication, or information of the F-gNB to which the UE is connected. The information of the F-gNB may include all or some of information such as an ID of a femto system to which the F-gNB belongs, or a Cell ID of the F-gNB, or a CAG ID allowed by the F-gNB, or a Femto indication indicating that it is a Femto base station.

According to the request in step 510, the PCF performs authentication for the PDU Session in step 511, and according to the authentication result, when the PCF delivers the SM policy to the SMF in step 512, an authentication result for use of the local data network for the requested S-NSSAI and DNN may be included. For example, the PCF may deliver an authentication identify for an authentication request from the SMF, or may directly include a local DN indication to inform that the local data network may be used. Accordingly, the SMF having received the authentication identify should create a PDU session using the local data network according to the received policy as in step 513, but recognizes that the SMF is in the macro system, and informs the AMF that the SMF selection was wrong (i.e., the selected SMF was incorrectly selected as an SMF of the macro system) as in step 514.

In step 514, when the SMF sends an Nsmf_PDUSession_CreateSMContext Response to the AMF, it includes a reject to inform that the PDU session establishment request in step 509 was rejected, and as the reason, a reject cause may include an indicator that the femto system should be selected or an indicator that the local DN should be selected. Accordingly, the AMF proceeds with a process of selecting a new SMF from the femto system and, when using the NRF, the AMF may transmit an Nnrf_NFDiscovery request message to the NRF in step 508c to obtain information of an SMF in the femto system. In this case, the Nnrf_NFDiscovery request message may include information about an SMF as a network entity that the AMF wants to discover, and may include some or all of a Femto ID or a cell ID of the F-gNB or a Femto indication obtained through step 507 to indicate the femto system or the F-gNB to which the UE is connected, in addition to the S-NSSAI and DNN. The NRF having received the request of step 508c may deliver address information of the L-SMF in the femto system to which the UE is connected to the AMF in step 508d. The address information of the L-SMF may include an FQDN of the L-SMF or IP address and port information. Of course, it is not limited to the example.

Thereafter, in step 515, the AMF may transmit an Nsmf_PDUSession_CreateSMContext Request message including the PDU Session establishment request message included and delivered in the MM-NAS message to the L-SMF selected in steps 508c and 508d, and accordingly, in step 516, the L-SMF selects an L-UPF, and thereafter performs remaining PDU Session establishment procedures such as setting up a User plane through an N4 message in steps 516 and 517 to create a PDU Session through which the UE may receive a communication service through the local DN.

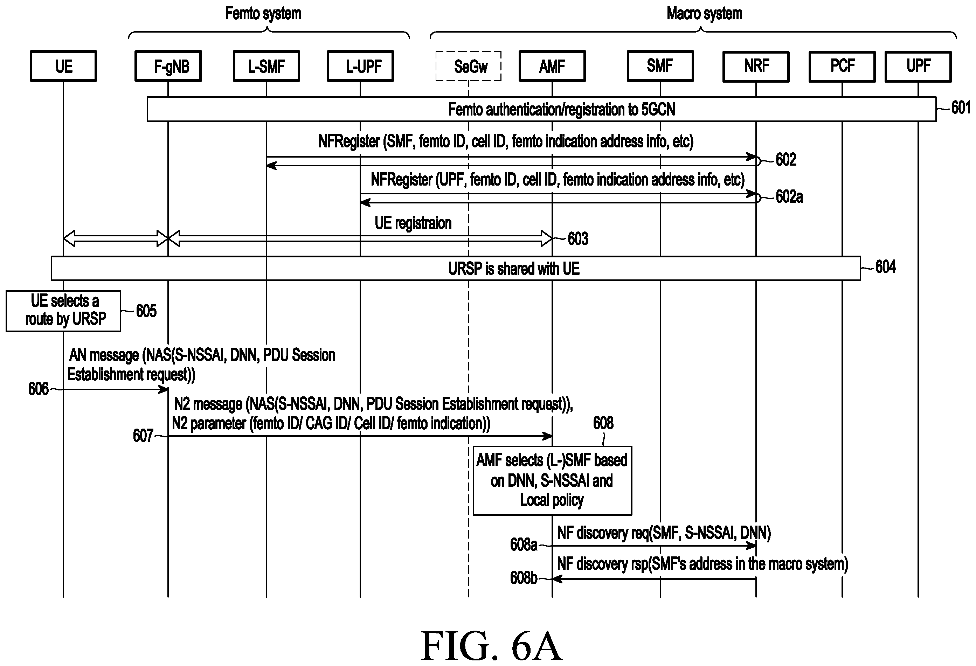

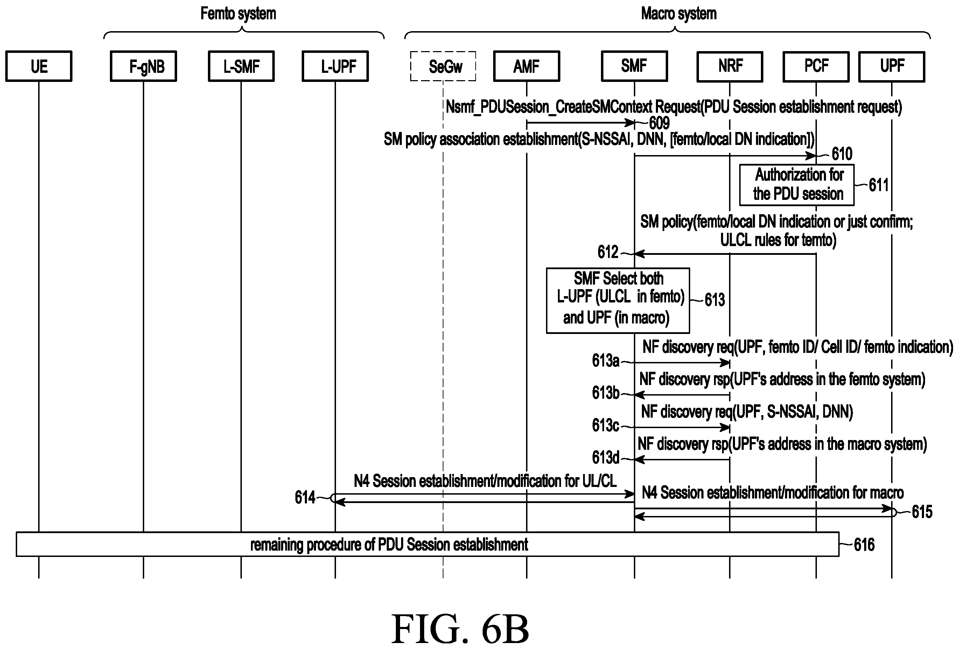

FIGS. 6A and 6B are views illustrating a method for creating a PDU session based on UE policy information (UE POLICY) for a UE connected to a network through a femto system in a wireless communication system supporting a femto system according to an embodiment of the disclosure. This embodiment relates to a method for creating a PDU session using an I-UPF (Intermediate UPF) (not illustrated) when the AMF is configured to select an SMF in the macro system or an L-SMF in the femto system according to a carrier's policy or the AMF's own policy, but the local Data network or macro data network selected according to UE policy does not match the network of the selected SMF.

Referring to FIGS. 6A and 6B, an embodiment is illustrated in which a UE receives a communication service from a local data network using a PDU session established through a femto system including an F-gNB, an L-SMF, and an L-UPF.

Referring to FIG. 6A, when the femto system is installed, in step 601, the femto system connects to the macro system to authenticate the femto system, and network entities of the femto system may be registered with the macro system so that network entities of the femto system and network entities of the macro system may interwork to perform operations for service provision. For authentication and security between the femto system and the macro system, a transaction between the femto system and the macro system may be performed through a security GW (SeGW) of the macro network. For example, the F-gNBF may register so that it may be identified in the AMF of the macro system. Through the registration, the AMF may also obtain information such as address information of the F-gNB or a cell ID of the F-gNB or a Femto ID or a femto indication indicating that the base station is a femto base station. Further, during the registration process, an ID and address information of the L-SMF may be included and registered with the AMF.

Further, the L-SMF of the femto system may register with the NRF of the macro system, and a network entity of the macro system may discover the L-SMF of the femto system as needed. For example, in step 602, the L-SMF may transmit an NFRegister message to the NRF of the macro system. Accordingly, the L-SMF may register information of the femto system together while informing that it is an SMF of the femto system.

Further, according to an embodiment, in step 602, the NFRegister message may include at least one of an ID of a femto system to which the L-SMF belongs, or a cell ID of an F-gNB, or a femto indication as an indicator indicating that it is a femto system, or a dedicated S-NSSAI used for the femto system, or address information of the L-SMF. The NRF may store the above-mentioned information (e.g., information about the femto system, etc.) in an NF profile and respond when another network entity such as an AMF wants to discover the L-SMF of the femto system later.

Further, the L-UPF of the femto system may register with the NRF of the macro system, and a network entity of the macro system may discover the L-UPF of the femto system as needed. For example, in step 602a, the L-UPF may transmit an NFRegister message to the NRF of the macro system. Accordingly, the L-UPF may register information of the femto system together while informing that it is a UPF of the femto system.

Further, according to an embodiment, in step 602a, the NFRegister message may include an ID of a femto system to which the L-UPF belongs, or a cell ID of an F-gNB, or a femto indication as an indicator indicating that it is a femto system, or a dedicated S-NSSAI used for the femto system, or address information of the L-SMF. The NRF may store the above-mentioned information (e.g., information about the femto system, etc.) in an NF profile and respond when another network entity such as an SMF wants to discover the L-UPF of the femto system later.

After the femto system is registered with the macro network, in step 603, the UE may perform registration with a communication network through the F-gNB. Then, in a circumstance in which URSP information is shared between the UE and the macro system as in step 604, in a circumstance in which the UE establishes a PDU Session through an application or the like, the UE determines/selects a route according to an appropriate route selection description such as S-NSSAI, DNN, access type preference, preferred cell type, or preferred data network type according to URSP, and accordingly may start a PDU session establishment request procedure.

In presenting the embodiment of the disclosure, a circumstance in which a matching Route is selected to connect to a local data network through a femto system is described as an example.

In step 606, when the UE transmits an MM-NAS message including a PDU Session establishment request message to the AMF, it may include an S-NSSAI or DNN created/configured/allocated for local data network access, or transmit an MM-NAS message including an indication indicating that local data network access is desired, such as a local DN indication, to the AMF, so that the AMF may identify the intent of the UE (e.g., whether to use a local data network or a macro data network, etc.). Alternatively, the UE may perform step 606 without including the local DN indication in any message.

The F-gNB having received the AN message from the UE may transmit an N2 message including the received MM-NAS message and an N2 parameter to the AMF in step 607. The N2 parameter may include information of the F-gNB to which the UE is connected. For example, the N2 parameter may include all or some of information such as an ID of a femto system to which the F-gNB belongs, or a Cell ID of the F-gNB, or a CAG ID allowed by the F-gNB, or a Femto indication indicating that it is a Femto base station.

Meanwhile, the AMF having received the N2 message selects an SMF in step 608. Steps 608a and 608b to be described below may be understood as detailed operations of step 608 when the (L-)SMF is selected through the NRF. It should be noted that the embodiment of the disclosure is not limited to selecting the (L-)SMF through the NRF. In other words, the operation of step 608 may include various operations of selecting the (L-)SMF without using the NRF, and in this case, steps 608a and 608b may be omitted.

In this case, according to the S-NSSAI or DNN received in step 607 or a carrier's policy or the AMF's own policy, the AMF selects an SMF in the macro system or an SMF in the femto system to which the UE is connected. Here, although the case where it is configured to select an SMF in the macro system is described as an example, the disclosure may also be applied when it is configured to select an SMF in the femto system.

In this case, the AMF may use the NRF as in steps 608a and 608b to discover an appropriate SMF in the macro system.

Referring to FIG. 6B, in step 609, the AMF may transmit an Nsmf_PDUSession_CreateSMContext Request message including the PDU Session establishment request message included and delivered in the MM-NAS message to the selected SMF, and the SMF having received this may receive authentication for use of the local data network for the requested S-NSSAI and DNN in steps 610 to 612 using SM policy information received from the PCF. In this case, when the SMF of the macro system requests SM policy association establishment in step 610, the request message may include some or all of an S-NSSAI, a DNN, a local DN indication, or information of the F-gNB to which the UE is connected. The information of the F-gNB may include all or some of information such as an ID of a femto system to which the F-gNB belongs, or a Cell ID of the F-gNB, or a CAG ID allowed by the F-gNB, or a Femto indication indicating that it is a Femto base station.

According to the request in step 610, the PCF performs authentication for the PDU Session in step 611, and according to the authentication result, when the PCF delivers the SM policy to the SMF in step 612, an authentication result for use of the local data network for the requested S-NSSAI and DNN may be included. For example, the PCF may deliver an authentication identify for an authentication request from the SMF, or may directly include a local DN indication to inform that the local data network may be used. In this case, the PCF may also deliver information about for example a 5 tuple and an ID of an application and characteristics of Application traffic for data that should use the local data network to the SMF together. The 5 tuple may include five well-known pieces of information for filtering traffic: Source IP address, Destination IP address, source port number, destination port number, and protocol ID. In other words, using the L-UPF as the I-UPF serving a ULCL (Uplink classifier) function for using the local data network, it may inform that the UE may receive a communication service through the femto system (i.e., through the local data network) for the specific traffic.

Accordingly, the SMF having received the authentication creates a PDU session in step 613 according to the received policy (SM policy) so that the UE may receive a communication service through the local data network through the ULCL function for some data traffic and may receive a communication service through the macro data network for some data traffic. In this case, a method for filtering data traffic for which the UE will receive a communication service through the local data network follows the policy (SM policy) received from the PCF as with a normal UPF, or may use information pre-stored in the SMF for processing traffic to cause the L-UPF to operate as the I-UPF as a ULCL role. To that end, the SMF selects an L-UPF in the femto system to instruct it to perform a ULCL role and selects a UPF in the macro system. For example, when the SMF discovers an L-UPF in the femto system and a UPF in the macro system through the NRF, in steps 613a and 613b, the SMF discovers and selects an L-UPF in the femto system to which the UE is connected, and in steps 613c and 613c, discovers and selects a UPF in the macro system, and in steps 614 and 615, the SMF creates or modifies an N4 session for each selected L-UPF and UPF to establish a data path for servicing data traffic to the UE, and in step 614, may set a rule for detecting data for the ULCL, e.g., filtering information, and a rule for forwarding detected data through the local data network, etc. to the L-UPF to use the local data network through the femto system.

Thereafter, in step 616, remaining PDU Session establishment procedures are performed to create a PDU Session that may provide a communication service to a UE through the local DN using the I-UPF of the femto system or provide a communication service through the UPF of the macro network.

According to the above-described embodiments of the disclosure, when a UE receives a communication service through a femto base station (or a femto system) in a wireless communication system, a local data network or a macro data network may be used, and it is possible to efficiently control which data network is used for transmitting/receiving data traffic. Accordingly, according to the disclosure, there is an advantage that data traffic may be offloaded according to a UE and network circumstance of a communication carrier, thereby efficiently using wireless communication resources.

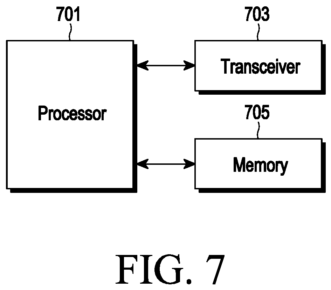

FIG. 7 is a view illustrating a configuration of a network entity in a wireless communication system according to an embodiment of the disclosure.

The network entity of FIG. 7 may be one of network entities such as a UE, an AMF, an SMF, a PCF (or NSSF), a NEF, and an AF described in the embodiments of FIGS. 1A to 6B.

As illustrated in FIG. 7, the network entity may include a processor 701, a transceiver 703, and memory 705. According to the communication method of the network entity described above in the embodiments of FIGS. 1A to 6B, the processor 701, the transceiver 703, and the memory 705 of the network entity may operate. However, the components of the network entity are not limited thereto. For example, the network entity may include more or fewer components than the above-described components. The processor 701, the transceiver 703, and the memory 705 may be implemented in the form of a single chip.

The transceiver 703 collectively refers to the receiver of the network entity and the transmitter of the network entity and may transmit and receive signals to/from a UE or another network entity. In this case, the signal transmitted and received may include at least one of control information and data. To that end, the transceiver 703 may include a wired/wireless transceiver and may include various components for transmitting/receiving signals. The transceiver 703 may receive signals through a predetermined communication interface, output the signals to the processor 701, and transmit the signals output from the processor 701. Further, when the network entity of FIG. 7 is a UE, the transceiver 703 may include an RF transmitter for frequency-up converting and amplifying signals transmitted and an RF receiver for low-noise amplifying signals received and frequency-down converting the frequency of the received signals. Further, the transceiver 703 may receive the communication signal and output it to the processor 701 and transmit the signal output from the processor 701 to the UE or another network entity through the network. The memory 705 may store programs and data necessary for the operation of the network entity according to at least one of the embodiments of FIGS. 1A to 6B. Further, the memory 705 may store control information or data that is included in the signal obtained by the network entity. The memory 705 may be configured with a storage medium such as ROM, RAM, a hard disk, CD-ROM, and DVD, or a combination of storage media.

The processor 701 may control a series of processes so that the network entity may operate according to at least one of the embodiments of FIGS. 1A to 6B. The processor 701 may include at least one processor. The methods according to the embodiments descried in the specification or claims of the disclosure may be implemented in hardware, software, or a combination of hardware and software. When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included. The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A method performed by an access and mobility management function (AMF) in a wireless communication system supporting a femto system, the method comprising:
receiving, from a femto base station to which a UE is accessed in the femto system, first information related to the femto system and a protocol data unit (PDU) session establishment request message for the UE;
selecting, based on the first information, a session management function (SMF) managing a PDU session of the UE; and
transmitting, based on the first information, a PDU session creation request message to the selected SMF.

2. The method of claim 1, wherein the receiving further comprises identifying whether the UE uses a local data network through the femto system based on whether the PDU session establishment request message includes a local data network indication.

3. The method of claim 2, wherein the transmitting further comprises transmitting a PDU session creation request message including the local data network indication to the SMF, in case that the PDU session establishment request includes the local data network indication, and
wherein the method further comprises:
receiving a PDU session creation response message from the SMF in response to the transmission of the PDU session creation request message; and
transmitting, to the UE via the femto base station, a PDU session establishment accept message accepting use of the local data network.

4. The method of claim 1, wherein the receiving comprises receiving a non-access stratum (NAS) message including the first information and the PDU session establishment request message, and
wherein the first information includes a femto indicator indicating the femto base station.

5. The method of claim 1, wherein the first information includes at least one of an ID of the femto system to which the femto base station belongs, a cell ID of the femto base station, a closed access group (CAG) ID allowed by the femto base station, and a femto indicator indicating the femto base station.

6. A method performed by a session management function (SMF) in a wireless communication system supporting a femto system, the method comprising:
receiving, from an access and mobility management function (AMF) having received a protocol data unit (PDU) session establishment request from a femto base station to which a UE is accessed in the femto system, a PDU session creation request message including information related to the femto system;
performing an authentication procedure for use of the femto system through a policy control function (PCF) managing policy information; and
selecting, based on a result of the authentication and the information related to the femto system, a user plane function (UPF) processing data traffic of the UE in the femto system.

7. The method of claim 6, wherein the SMF identifies, based on the local data network indication, that the UE uses a local data network through the femto system, in case that the PDU session creation request message includes a local data network indication.

8. The method of claim 6, wherein the information related to the femto system includes at least one of an ID of the femto system to which the femto base station belongs, a cell ID of the femto base station, a closed access group (CAG) ID allowed by the femto base station, and a femto indicator indicating the femto base station.

9. An access and mobility management function (AMF) in a wireless communication system supporting a femto system, the AMF comprising:
a transceiver; and
a processor configured to:
receive, through the transceiver, from a femto base station to which a UE is accessed in the femto system, first information related to the femto system and a protocol data unit (PDU) session establishment request message for the UE,
select, based on the first information, a session management function (SMF) managing a PDU session of the UE, and
transmit, through the transceiver, based on the first information, a PDU session creation request message to the selected SMF.

10. The AMF of claim 9, wherein the processor is further configured to identify whether the UE uses a local data network through the femto system based on whether the PDU session establishment request message includes a local data network indication.

11. The AMF of claim 10, wherein the processor is further configured to:
transmit, through the transceiver, a PDU session creation request message including the local data network indication to the SMF, in case that the PDU session establishment request includes the local data network indication,
receive, through the transceiver, a PDU session creation response message from the SMF in response to the transmission of the PDU session creation request message, and
transmit, through the transceiver, to the UE via the femto base station, a PDU session establishment accept message accepting use of the local data network.

12. The AMF of claim 9, wherein the processor is configured to receive, through the transceiver, a non-access stratum (NAS) message including the first information and the PDU session establishment request message, and
wherein the first information includes a femto indicator indicating the femto base station.

13. A session management function (SMF) in a wireless communication system supporting a femto system, the SMF comprising:
a transceiver; and
a processor configured to:
receive, through the transceiver, from an access and mobility management function (AMF) having received a PDU session establishment request from a femto base station to which a UE is accessed in the femto system, a protocol data unit (PDU) session creation request message including information related to the femto system,
perform an authentication procedure for use of the femto system through a policy control function (PCF) managing policy information, and
select, based on a result of the authentication and the information related to the femto system, a user plane function (UPF) processing data traffic of the UE in the femto system.

14. The SMF of claim 13, wherein the processor is further configured to identify, based on the local data network indication, that the UE uses a local data network through the femto system, in case that the PDU session creation request message includes a local data network indication.

15. The SMF of claim 13, wherein the information related to the femto system includes at least one of an ID of the femto system to which the femto base station belongs, a cell ID of the femto base station, a closed access group (CAG) ID allowed by the femto base station, and a femto indicator indicating the femto base station.
